# EUROPEAN PATENT APPLICATION

(11) **EP 2 711 444 A1**
(43) Date of publication of application: **26.03.2014**
(21) Application number: 12185252.9
(22) Date of filing: 20.09.2012
(51) Int. Cl.: C23C 22/83, C25D 11/24

(54) **Alkaline aqueous solution for improving corrosion resistance of a Cr(III) conversion coating and method for producing such coating and its use**

(71) Applicant: Coventya SAS, 92390 Villeneuve-la-Garenne (FR)
(72) Inventor: OUWANSSI, André, 95200 Sarcelles (FR); THIERY, Lionel, 92110 Clichy (FR)
(74) Representative: Pfenning, Meinig & Partner GbR

(57) **Abstract**

This invention relates to a composition and a method for preparing an organic protective coating on a Cr(III) conversion layer which is localized on aluminium or an aluminium alloy to enhance corrosion protection. The composition is an alkaline aqueous solution which contains at least one corrosion inhibitor, a buffering agent and at least one organic film former. According to the method of the present invention, the composition is used for post-treating of a Cr(III) conversion layer on aluminium or an aluminium alloy and on anodized aluminium or an anodized aluminium alloy.

## Description

This invention relates to a composition and a method for preparing an organic protective coating on a Cr(III) conversion layer which is localized on aluminium or an aluminium alloy to enhance corrosion protection. The composition is an alkaline aqueous solution which contains at least one corrosion inhibitor, a buffering agent and at least one organic film former. According to the method of the present invention, the composition is used for post-treating of a Cr(III) conversion layer on aluminium or an aluminium alloy and on anodized aluminium or an anodized aluminium alloy.

Chromate based conversion coatings are widely used for the protection of aluminium and aluminium alloys. They act as a protective coating against corrosion and also serve as a base for paint adhesion. Moreover, current high-performance post-treatments or sealers for aluminium are based on hexavalent chromium chemistry. Toxicological studies have evidenced the hazardous character of hexavalent chromium. The salts of hexavalent chromium like chromic acid (CrO₃) or sodium dichromate (Na₂Cr₂O₇) are recognized as CMR category 1 compounds, which means their carcinogenic, mutagenic and reprotoxic properties are proven. It is therefore an obligation to set up all the preventive actions to keep workers protected from these substances. A further object is to look for appropriate substitution treatments for the corrosion protection of aluminium and its alloys.

Other sectors of activity have already moved towards a Cr(VI)-free treatment e.g. the sacrificial protection of steel with zinc. Up to now, a zinc deposit was protected by conversion coatings based on the use of hexavalent chromium. The upcoming of the ELV directive entered in force on July 1, 2007 forced the various actors of the supply chain to move in the direction of non-Cr(VI)-containing technologies.

Many solutions have already been developed. Nevertheless, these solutions do not always meet the requirements for corrosion protection. This is especially true for corrosion protection of aluminium alloys which are rich in an alloy metal which is sensitive to oxidation (e.g. Cu-rich Al-alloys) (168h in neutral salt spray test according to ISO 9227).

The possibility of the corrosion inhibition of an aluminium alloy metal, especially copper, has attracted many researchers. Until now, numerous possible inhibitors have been investigated. Amongst them, there are organic compounds and their derivatives such as azoles, amines, amino acids and many others (Brusik & Frisch, J. Electrochem. Soc., 1991, vol. 138, no. 8, pp. 2253-2259; Antonijevic & Petrovic, Int. J. Electrochem. Set., 2008, vol. 3, pp. 1-28; Tromans D., J. Electrochem. Soc., 1998, vol. 145, no. 3, pp. 42-45).

It was noticed that the presence of a heteroatom such as nitrogen and sulphur with free electron pairs, aromatic rings with delocalized π electrons, high molecular weight alkyl chains, and substituent groups in general may improve inhibition efficiency. The effect of electron-donor groups is particularly favourable. Group position was found to be important and 2-and 5-positions were shown to be more convenient.

The best organic inhibitors known today to inhibit copper as an aluminium alloy metal are triazole compounds (C₂H₃N₃) such as benzotriazole, tolyltriazole, and thiazole compounds (C₃H₃NS) such as mercaptobenzothiazole, benzothiazole, and dimercaptothiadiazole.

They were found to react with copper ions to give a complex by forming a protective film chemisorbed on the surface. There is an adsorption of the active centres on the metal which gives a stable film to block the attack of aggressive ions like chloride ions during the neutral salt spray test. For triazole compounds, it can form Cu-N and for thiazole compounds, it can form Cu-S.

For benzotriazole for example, the thickness of the film was determined to be 0.5-4 nm in the pH range from 3 to 12 (Brusic & Frisch, J. Electrochem. Soc., 1991, vol. 138, no. 8, pp. 2253-2259). Indeed, the pH is very important to form a good protective film. Brusic & Frisch also studied the effect of pH in presence of benzotriazole 1H-BTA on copper corrosion. In presence of 1H-BTA, the corrosion rate as function of pH being the lowest in the pH range of 7-12, where Cu-oxides are stable. The effect of 1H-BTA is significantly enhanced in terms of corrosion protection over that provided by Cu oxides under optimal conditions i.e. in alkaline solutions.

Therefore, the film formed on the Cu-oxides provides better corrosion resistance than the film formed in acidic media. In alkaline media, the films are probably built over Cu₂O through surface reaction of triazole or thiazole compounds and Cu(I) ions. The copper treated with these inhibitors at alkaline pH can be described as composite such as Cu-BTA/Cu₂O/Cu.

In EP 1 404 894 B1 and EP 1 451 388 B1, numerous Cr(III) conversion treatments were tested on a 2024 aluminium alloy giving mitigated results in terms of corrosion resistance. Indeed, it is known that aluminium is very well passivated in Cr(III) oxidizer media. However, it is not necessarily the case if an alloy metal is present in the aluminium (e.g. copper in an Al-Cu alloy). Usually, for increasing the corrosion resistance of an aluminium alloy, an inhibition of the alloy inclusions (e.g. copper inclusions) in the aluminium alloy is attempted. For example, it is known that the use of copper inhibitors in a Cr(III) conversion improves the corrosion resistance for Cu-rich aluminium alloys.

In WO 2006/088521 A2, it is mentioned that the use of triazole compounds in the Cr(III) conversion medium is useful in protecting aluminium substrates. However, the conversion processes are carried out in an aqueous acidic medium. As the acidic medium is aggressive to the aluminium and/or aluminium alloy metal, the corrosion protection is limited (e.g. to 120 h of NSST maximum without pitting for a passivated 2024 Al-Cu alloy).

Therefore, an improved composition and/or method are needed to enhance the corrosion protection of the deposited chromium on aluminium coating.

The solution to the problem is provided by the aqueous alkaline solution for improving corrosion resistance of a Cr(III) conversion coating on aluminium, an aluminium alloy, anodized aluminium and/or an anodized aluminium alloy according to claim 1, the methods for providing a modified Cr(III) conversion coating according to one of claims 10 and the Cr(III) conversion coating according to claim 13. The inventive use is described in claim 15. The further dependent claims mention preferred embodiments.

According to the invention, an alkaline aqueous solution for improving corrosion resistance of a Cr(III) conversion coating on aluminium or aluminium alloy is provided. The solution comprises:
a) 0,01 to 30 g/L of at least one buffering agent;
b) 0.01 to 6.0 g/L of at least one corrosion inhibitor; and
c) 0 to 4.0 g/L of at least one organic film forming agent.

The solution is **characterized in that** it does not dissolve a Cr(III) conversion coating on aluminium or an aluminium alloy.

According to the invention, the aluminium which is contacted and protected by the inventive aqueous solution is aluminium, an aluminium alloy, anodized aluminium and/or an anodized aluminium alloy which has a Cr(III) conversion coating localized on the surface.

The Cr(III) conversion coating, which is supposed to be contacted with the inventive solution, may e.g. be formed by an acidic conversion solution (e.g. Lanthane 613.3 by Coventya). The formation of the Cr(III) conversion coating on aluminium or an aluminium alloy and on anodized aluminium or an anodized aluminium alloy may be performed just before the inventive solution is brought into contact with the Cr(III) conversion coating. By contacting the Cr(III) conversion coating with the inventive solution, the Cr(III) conversion coating is chemically modified and is provided with significantly improved corrosion resistance compared to the unmodified Cr(III) conversion coating.

The advantage of the buffering agent comprised by the inventive alkaline solution is that the buffering agent maintains the alkalinity of the solution i.e. maintains OH⁻ ions in the solution to neutralize acidic ions (e.g. H⁺) which are still present on and within the (unmodified) Cr(III) conversion coating. The reason is that the Cr(III) conversion coating is produced in an acidic conversion solution (e.g. Lanthane 613.3 by Coventya) and acid of the conversion solution can remain entrapped within the first layer of the Cr(III) conversion coating. Regarding the capability to effectively resist corrosion, it is detrimental for the aluminium alloy if an acidic solution deeply penetrates into its structure.

Furthermore, neutralization of residual acid by the OH⁻-ions can prevent hydrogen embrittlement which usually occurs by penetration of hydrogen and/or protons in the microstructure of the aluminium substrates.

Finally, neutralizing the surface of the aluminium structure after the Cr(III) conversion coating has been applied provides a higher level of safety and health for workers since the workers are not brought into contact with acidic material.

In a preferred embodiment of the invention, the inventive aqueous solution is **characterized in that** the buffering agent is selected from the group consisting of amine, phosphate, citrate and acetate compounds, more preferably triethanolamine, tris(hydroxymethyl)aminomethane and/or potassium hydrogen phosphate. The advantage of said buffering agents is that they provide the solution with an improved shelf-life and also a higher working stability. The buffering agent may have a concentration of 0.1 to 25 g/L, preferably 1 to 10 g/L, more preferably 2 to 6 g/L.

The alkaline aqueous solution may be adjusted to a pH in the range of pH 7 to 9, preferably to a pH in the range of pH 8 to 8.5.

A second reason why the inventive solution significantly improves corrosion resistance is that the alkaline aqueous solution comprises at least one corrosion inhibitor. The corrosion inhibitor chemically reacts with certain alloy metals (e.g. copper inclusions) in the aluminium after the Cr(III) conversion.

Preferred alloy metals of aluminium are thus metals which are capable to form a chemical complex with the corrosion inhibitor (e.g. with triazole and/or thiazole compounds). The inventive solution may be contacted with the Cr(III) conversion coating by simple dipping. Said contacting allows the reaction between the corrosion inhibitor and inclusions of alloy metal (e.g. Cu) as far as the alloy metal cannot be or is not effectively coated by the Cr(III) conversion coating itself.

In a further preferred embodiment, the aluminium alloy is selected from the group consisting of aluminium copper alloys and 2024 alloys of aluminium.

In a preferred embodiment of the invention, the inventive solution is **characterized in that** the corrosion inhibitor comprises
a) an azole, preferably benzazole;
b) a diazole, preferably benzimidazole;
c) an oxazole, preferably benzoxazole;
d) a triazole, preferably selected from the group consisting of tolyltriazole and benzotriazole;
e) a thiazole, preferably selected from the group consisting of benzothiazole, mercaptobenzothiazole and dimercaptothiadiazole; and/or
f) a thiol, preferably benzenethiol,
or consists thereof.

The corrosion inhibitor according to the present invention may comprise a thiocarbonyl group. For corrosion inhibitors comprising a thiocarbonyl group, it was discovered that the reaction with an alloy metal (e.g. Cu) is favoured at alkaline pH. For example, Mercaptobenzothiazole contains three atoms available i.e. N and S atoms in the ring and an S atom of the thiocarbonyl group. In this regard, the S atom of the thiocarbonyl group (C=S) is ionized in alkaline media and thus can react with alloy metal (e.g. Cu) and form a thick polymeric film. In the case of triazole compounds, it was found that films formed at alkaline pH are less permeable to oxygen than films formed at acidic pH.

The concentration of the at least one corrosion inhibitor may be 0.1 to 6 g/L, preferably 1 to 4 g/L and more preferably 1.5 to 3 g/L.

In a preferred embodiment of the invention, the inventive aqueous solution comprises a film forming agent. The film forming agent produces an additional homogenous thin film on the surface of the Cr(III) conversion coating which additionally reduces pitting, improves protection against corrosion and improves the aspect of parts. Moreover, the thin film on the surface may provide a surface with a low electrical conductivity. Finally, the thicker the film on the surface is, the more corrosion inhibitor can be maintained in the film and on the surface of the Cr(III) conversion coating. Thus, the positive effect of the corrosion inhibitor is increased by the film forming agent and by the alkaline pH of the solution.

In conclusion, in this preferred embodiment, the pH of the solution, the film forming agent and the corrosion inhibitor synergistically act together to improve the corrosion protection capability of the inventive alkaline aqueous solution. In addition, inclusion of a film forming agent into the inventive solution significantly improves the aspect of the final modified Cr(III) conversion layer.

According to the present invention, the organic film forming agent may be selected from the group consisting of water-soluble polyvinyl compounds, polyacrylic compounds and polyurethane compounds, preferably soluble polyvinyl alcohols, more preferably partially hydrolyzed polyvinylalcohol, especially Mowiol 4-88^{®}. Mowiol 4-88^{®} is a polyvinyl alcohol (PVA) prepared by partial hydrolysis. It has been discovered that Mowiol 4-88^{®} is particularly advantageous since it forms a thin film which does not modify the conductivity of the deposited layer.

The film forming agent may have a concentration of 0.01 to 4.0 g/L, preferably 0.1 to 3.0 g/L, more preferably 0.8 to 2.0 g/L.

According to a further preferred embodiment of the invention, the inventive solution is **characterized in that** it further comprises an organic solvent, preferably an alcohol or a ketone, more preferably isopropanol, ethylene glycol and/or methyl ethyl ketone. Most preferably, the organic solvent dissolves homogenously in water i.e. without phase separation. The presence of the organic solvent can increase the solubility of the corrosion inhibitor which is present in the inventive solution.

If e.g. triazole compounds are used as a powder, they may first be dissolved in an appropriate solvent before addition to the solution. For instance, tolyltriazole may first be disolved in isopropanol, ethylene glycol or methyl ethyl ketone. The solubility of tolyltriazole in said solvents is much higher than in water.

The solution may further comprise a salt of an acid or a base, preferably a salt of sulphuric acid or ammonia. Addition of an acid or a base to the solution may be necessary to adjust and/or maintain the pH of the solution.

Optionally, stabilizing compounds such as amine, phosphate and citrate compounds, preferably ethylene glycol, may be added to the inventive solution,

The stabilizing agent may have a concentration of 1 to 50 g/L, preferably 10 to 40 g/L, most preferably 20 to 30 g/L.

Additionally, a method for providing a modified Cr(III) conversion coating on aluminium or an aluminium alloy having a Cr(III) conversion coating localized on the surface is provided. The method comprises the step of contacting a Cr(III)-conversion coating localized on the surface of aluminium or an aluminium alloy with the inventive solution for a time of 30 seconds to 5 minutes, wherein the solution has a temperature of 20 to 25°C, to form a modified Cr(III)-conversion coating.

In the same way, a method for providing a modified Cr(III) conversion coating on anodized aluminium or an anodized aluminium alloy having a Cr(III) conversion coating localized on the surface is provided. The method comprises the steps of
a) contacting a Cr(III)-conversion coating localized on the surface of an anodized layer of aluminium or aluminium alloy, the anodized layer having a thickness in the nm-range to µm-range, with the inventive solution for a time of 30 seconds to 5 minutes, wherein the inventive solution has a temperature of 20 to 25°C, to form a modified Cr(III)-conversion coating; and
b) sealing the modified Cr(III) conversion coating by contacting the modified Cr(III) conversion coating with water having temperature of 98 to 100°C for a time of 1 to 5 min per µm thickness of the anodized layer.

Preferably, sealing in step b) is performed for a time of 1 to 4 min/µm of anodized layer, more preferably 2 to 4 min/µm, most preferably 3 min/µm of anodized layer.

After contacting and/or sealing, a drying step may be performed at a temperature of 20 to 60 °C, preferably 30 to 50°C, more preferably at 40 °C. Drying may be performed by a method selected from the group consisting of air drying, forced air drying and oven drying.

Finally, a modified Cr(III) conversion coating on aluminium or an aluminium alloy is provided which is **characterized in that** it has a corrosion resistance of up to 168 hours, preferably 216 hours, in the neutral salt spray chamber (NSS) according to ISO 9227.

Preferably, the modified Cr(III) conversion coating has a thickness of 30 to 200 nm, more preferably 50 to 200 nm. The thickness of the Cr(III) conversion coating may e.g. be determined by measuring the thickness of a cryofracture of the modified Cr(III) conversion coating layer with Scanning Electron Microscopy (SEM).

In a preferred embodiment of the invention, the modified Cr(III) conversion coating is producible with the inventive method.

The inventive alkaline aqueous solution may generally be used for improving corrosion resistance of a Cr(III)-conversion coating on aluminium, an aluminium alloy, anodized aluminium and/or an anodized aluminium alloy.

With reference to the following examples and figures, the subject according to the invention is intended to be explained in more detail without wishing to restrict said subject to the special embodiments shown here.

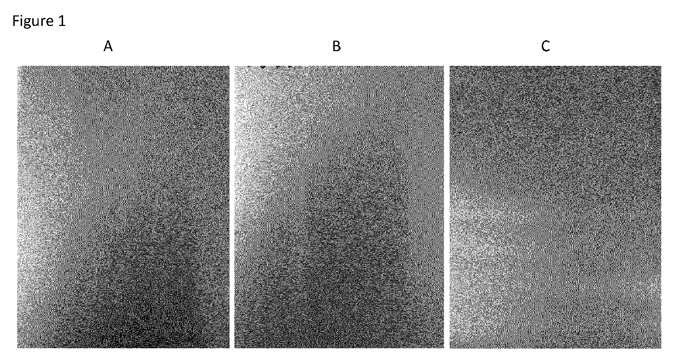

Fig. 1 shows a picture highlighting the corrosion performance of the aluminium alloy (2024-T3) panel with a Cr(III) conversion coating derived from the composition of Example 1 and a top coat coating derived from the composition of Example 2. For testing the corrosion performance, the neutral salt spray test (NSS test) according to ISO 9227 was conducted.

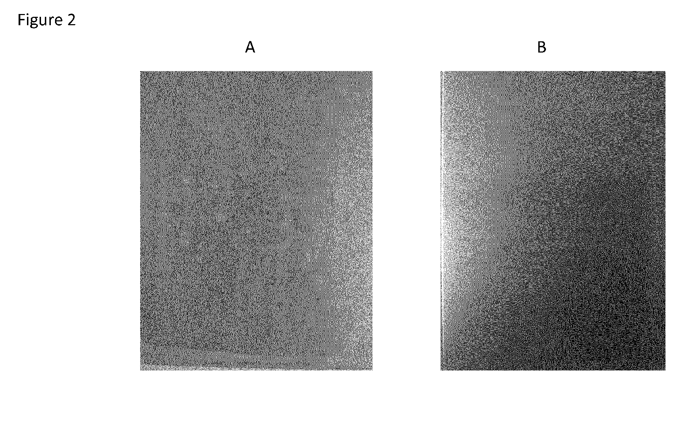

Fig. 2 shows a picture highlighting the effect of the film forming agent on the aspect of the film. The top coat coating was produced with the composition of Example 2 without (A) and with Mowiol 4-88^{®} (B) as film forming agent. For testing the corrosion performance, the neutral salt spray test (NSS test) according to ISO 9227 was conducted.

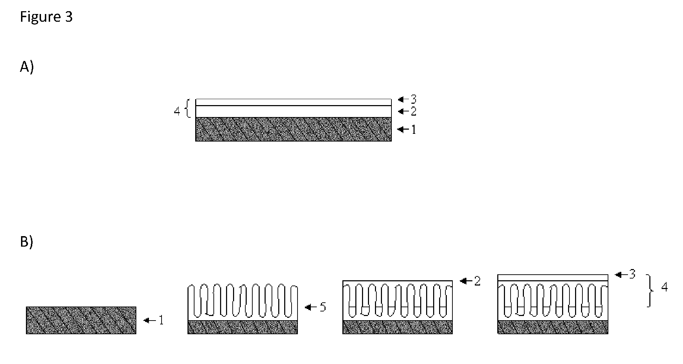

Fig. 3 is a simplified schematic illustration showing the different layers provided after the formation of the top coat i.e. modified Cr(III) conversion coating on aluminium or an aluminium alloy (A) and on anodized aluminium or an anodized aluminium alloy (B). It has only representative purpose to describe the sequence of the different layers described in the invention.
Figure 1A shows a picture demonstrating the corrosion performance of the aluminium alloy (2024-T3) panel with a Cr(III) conversion coating derived from the composition of Example 1. Figure 1B shows the corrosion performance of the aluminium alloy (2024-T3) panel with a Cr(III) conversion coating derived from the composition of Example 1 and a top coat coating derived from the composition of Example 2 after 168 h of Salt Spray Test according to ISO 9227.
Figure 1C shows the corrosion performance of the aluminium alloy (2024-T3) panel with a Cr(III) conversion coating derived from the composition of Example 1 and a top coat coating derived from the composition of Example 2 after 216 h of Salt Spray Test according to ISO 9227. No corrosion pits could be observed for the treatment with top coat solution 1 after 168 h (see Fig. 1B) and even after 216 h (see Fig. 1C). On the other hand, corrosion is present after 168 h when no top coat solution i.e. inventive aqueous alkaline solution is applied on the Cr(III) conversion coating of Example 1 (see Fig. 1A).
Figure 2 shows a picture which demonstrates the effect of the film forming agent Mowiol 4-88^{®} on the aspect of the final layer. The aspect of aluminium substrates with a top coat coating derived from the composition of Example 2 comprising Mowiol 4-88^{®} (Figure 2B) is compared to the same composition lacking Mowiol 4-88^{®} (Figure 2A). The improvement on aspect that results from the film forming agent is clearly visible.
Figure 3 illustrates the different layers provided after the formation of modified Cr(III) conversion coating. In Figure 3A, a Cr(III) conversion coating 2 is located on the surface of aluminium or an aluminium alloy 1. After contacting the Cr(III) conversion coating 2 with a top coat solution i.e. the inventive aqueous solution, an organic top coat layer 3 has been formed. Said organic top coat layer and the Cr(III) conversion layer represent the inventive, modified Cr(III) conversion layer 4. In Figure 3B, an anodized layer 5 is located between the aluminium or aluminium alloy 1 and the Cr(III) conversion coating 2.

The following Examples illustrate different top coat solutions, and the method of using the solutions in providing corrosion-resistant coatings for aluminium substrates like Cr(III) passivated aluminium.

### Example 1 - Lanthane 613.3 passivation solution

To make up one liter of passivation solution for forming a Cr(III) conversion coating, add in demineralised water 100 ml of Lanthane 613.3 part A and 75 ml of part B (Coventya). Adjust the pH at 3.5 using HNO₃ 10%. The resulting solution is called Lanthane 613.3.

### Example 2 - Top coat solution 1 (Inventive solution)

To make up one liter of top coat solution 1, add 2 g of mercaptobenzothiazole, 4 g of triethanolamine, 1 g of Mowiol 4-88^{®}. Stir solution until all compounds are dissolved. Adjust the pH at 8.3 using H₂SO₄ 10%. The effect of this top coat solution on corrosion protection was studied (see Figure 1).

The beneficial effect of Mowiol 4-88^{®} incorporation can be seen from Figure 3. Figure 3A shows an inhomogeneous aspect in absence of Mowiol 4-88^{®} whereas Figure 3B shows a homogeneous aspect thanks to the addition of Mowiol 4-88^{®}.

### Example 3 - Method for improving corrosion resistance of a Cr(III)-conversion coating on aluminium or aluminium alloy

Process sequence comprising the steps of preparing the aluminium substrate, producing the Cr(III) conversion coating and formation of the modified conversion top coat (the essential step of the inventive method is in bold):
- Cleaning with Soft alkaline cleaner (LUMIA CLEAN 111): 40g/L; 10 min; 55°C
- Rinse x 2 (demineralised water)
- Doxidizing/Desmutting (LUMIA DEOX 411) : 20% vol; 10 min ; room Temperature
- Rinse ED x 2 (demineralised water)
- Passivate (LANTHANE 613.3) : [part A]=100 ml/L; [part B]=75 ml/L; pH = 3,5 ; 5 min ; 40°C
- Rinse ED x 2 (demineralised water)
- **Top coat formation: Contacting with top coat solution 1 or 2 for 1 min**
- Drying : 40°C

### Example 4 - Method for improving corrosion resistance of a Cr(III)-conversion coating comprising a step of sulfuric anodizing of the aluminium alloy

This example shows the use of the inventive solution after sulfuric anodizing on aluminium alloys. Two different alloys were tested (2024 T3 and 7075-T6).

To make up one liter of anodizing solution, add in demineralised water 200 g/L of sulphuric acid,

Process sequence comprising the steps of preparing the aluminium substrate, producing the anodized layer, Cr(III) conversion coating and formation of the modified conversion Cr(III) conversion coating (the essential step of the inventive method is highlighted in bold):
- Cleaning with Soft alkaline cleaner (LUMIA CLEAN 101) : 30g/L; 10 min; 40°C
- Rinse x 2 (demineralised water)
- Etching (LUMIA ECTH 200) : 2% vol ; 1 min ; 50°C
- Rinse ED x 2 (demineralised water)
- Doxidizing/Desmutting (LUMIA DEOX 412): 30g/L + 5% H₂SO₄; 1 min ; room temperature
- Rinse ED x 2 (demineralised water)
- Sulfuric anodizing : H₂SO₄ (200 g/L) ; 18°C; 30 min (10µm)
- Rinse ED x 2 (demineralised water)
- Passivate (LANTHANE 613.3) : [part A]=100 ml/L; [part B]=75 ml/L; pH = 3,5 ; 10 min ; 40°C
- Rinse ED x 2 (demineralised water)
- **Top coat formation: Contacting with top coat solution 1 or 2 for 1 min**
- Sealing : hot demineralised water (98°C); 30 min
- Drying : 40°C

## Claims

1. Alkaline aqueous solution for improving corrosion resistance of a Cr(III)-conversion coating on aluminium, an aluminium alloy, anodized aluminium and/or an anodized aluminium alloy, the solution comprising
a) 0.01 to 30 g/L of a buffering agent;
b) 0.01 to 6.0 g/L of at least one corrosion inhibitor; and
c) 0 to 4.0 g/L of at least one organic film forming agent.

2. Solution according to one of the preceding claims, **characterized in that** the corrosion inhibitor comprises
a) an azole, preferably benzazole;
b) a diazole, preferably benzimidazole;
c) an oxazole, preferably benzoxazole;
d) a triazole, preferably selected from the group consisting of tolyltriazole and benzotriazole;
e) a thiazole, preferably selected from the group consisting of benzothiazole, mercaptobenzothiazole and dimercaptothiadiazole; and/or
f) a thiol, preferably benzenethiol,
or consists thereof.

3. Solution according to one of the preceding claims, **characterized in that** the corrosion inhibitor comprises a thiocarbonyl group.

4. Solution according to one of the preceding claims, **characterized in that** the concentration of the corrosion inhibitor is 0.1 to 6 g/L, preferably 1 to 4 g/L, more preferably 1.5 to 3 g/L.

5. Solution according to one of the preceding claims, **characterized in that** the organic film forming agent
a) is selected from the group consisting of water-soluble polyvinyl compounds, polyacrylic compounds and polyurethane compounds, preferably soluble polyvinyl alcohols, more preferably a partially hydrolyzed polyvinyl alcohol; and/or
b) has a concentration of 0,01 to 4.0 g/L, preferably 0.1 to 3.0 g/L, more preferably 0.8 to 2.0 g/L.

6. Solution according to one of the preceding claims, **characterized in that** the aluminium alloy is selected from the group consisting of aluminium copper alloys and 2024 alloys of aluminium.

7. Solution according to one of the preceding claims, **characterized in that** the buffering agent
a) is selected from the group consisting of amine, phosphate, citrate and acetate compounds, more preferably triethanolamine, tris(hydroxymethyl)aminomethane, potassium dihydrogen phosphate and/or disodium hydrogen phosphate; and/or
b) has a concentration of 0.1 to 22 g/L, preferably 1 to 10 g/L, more preferably 2 to 6 g/L.

8. Solution according to the one of the preceding claims, **characterized in that** the alkaline aqueous solution is adjusted to a pH in the range of pH 7 to 11, preferably 9 to 10.

9. Solution according to one of the preceding claims, **characterized in that** the solution further comprises
a) an organic solvent, preferably an alcohol or a ketone, more preferably isopropanol, ethylene glycol and/or methyl ethyl ketone; and/or
b) a salt of an acid or a base, preferably a salt of sulphuric acid or ammonia.

10. Method for providing a modified Cr(III)-conversion coating on aluminium or an aluminium alloy having a Cr(III) conversion coating on their surface, wherein the method comprises the step of contacting a Cr(III)-conversion coating localized on the surface of aluminium or an aluminium alloy with a solution according to one of claims 1 to 11 for a time of 30 seconds to 5 minutes, wherein the solution has a temperature of 20 to 25 °C, to form a modified Cr(III)-conversion coating.

11. Method for providing a modified Cr(III)-conversion coating on anodized aluminium or an anodized aluminium alloy having a Cr(III)-conversion coating on their surface, wherein the method comprises the steps of
a) contacting a Cr(III)-conversion coating localized on the surface of an anodized layer of aluminium or aluminium alloy, the anodized layer having a thickness in the nm-range to µm-range, with a solution according to one of claims 1 to 11 for a time of 30 seconds to 5 minutes, wherein the solution has a temperature of 20 to 25 °C, to form a modified Cr(III)-conversion coating; and
b) sealing the modified Cr(III) conversion coating by contacting the modified Cr(III) conversion coating with water having temperature of 98 to 100°C for a time of 1 to 5 min per µm thickness of the anodized layer.

12. Method according to one of claims 10 or 11, **characterized in that** after contacting and/or sealing, a drying step is performed at a temperature of 20 to 60 °C, preferably 30 to 50 °C, more preferably at 40 °C.

13. Modified Cr(III) conversion coating on aluminium or an aluminium alloy, **characterized in that** the coating has
a) a corrosion resistance of up to 168 hours, preferably 216 hours, in the neutral salt spray chamber (NSS test) according to ISO 9227; and/or
b) a thickness of ≥ 30 nm, preferably ≥ 50 nm, more preferably from 50 to 200 nm.

14. Coating according to claim 13, producible with the method according to one of claims 10 to 12.

15. Use of the alkaline aqueous solution according to one of claims 1 to 9 for improving corrosion resistance of a Cr(III)-conversion coating on aluminium, an aluminium alloy, anodized aluminium and/or an anodized aluminium alloy.
